# EUROPEAN PATENT APPLICATION

(11) **EP 4 393 609 A1**
(43) Date of publication of application: **03.07.2024**
(21) Application number: 22859556.7
(22) Date of filing: 01.06.2022
(51) Int. Cl.: B08B 3/08, G01N 35/10

(54) **AUTOMATED ANALYSIS DEVICE AND FEED TANK FOR AUTOMATED ANALYSIS DEVICE**

(30) Priority: 23.08.2021 JP 2021135695
(71) Applicant: HITACHI HIGH-TECH CORPORATION, Tokyo 105-6409 (JP)
(72) Inventor: MURAMATSU, Yoshiki, Tokyo 105-6409 (JP); TAKAYAMA, Hiroyuki, Tokyo 105-6409 (JP); KUMAGAI, Takahiro, Tokyo 105-6409 (JP); OGURO, Yasuhisa, Tokyo 105-6409 (JP)
(74) Representative: MERH-IP Matias Erny Reichl Hoffmann Patentanwälte PartG mbB
(86) International application number: PCT/JP2022/022295
(87) International publication number: WO 2023/026624

(57) **Abstract**

An automatic analyzer 100 includes a water supply tank 53 temporarily reserving liquid fed from automatic analyzer outside and consumed in each mechanism of the automatic analyzer 100, a supply flow passage 64 connected to each mechanism of the automatic analyzer 100 from the water supply tank 53, a water supply pump 54 supplying the liquid within the water supply tank 53, and a circulation flow passage 65 returning the liquid discharged from the water supply pump 54 to the water supply tank 53, in which in the water supply tank 53, a flow whirling within the water supply tank 53 by the liquid from the circulation flow passage 65 is formed, and a bottom surface 301 of a rising slope is included. Accordingly, an automatic analyzer and a water supply tank for the automatic analyzer that has high reliability and is capable of suppressing generation frequency of dirt and bacteria generated on an inner surface of a water supply tank and reducing cleaning frequency of the water supply tank, are provided.

## Description

### Technical Field

The present invention relates to an automatic analyzer and a water supply tank for the automatic analyzer.

### Background Art

As an example of an apparatus inner pipe appropriate for supplying purified water to a cleaning tank of an automatic analyzer or an injection water mechanism through a nozzle, PTL 1 discloses a structure in which a self-operated control type depressurization valve is located between an electric booster pump and a branch pipe, a direct-acting solenoid valve and a fixed resistance pipe having a specific hole diameter and length are provided in a destination pipe from the branch pipe, and water is supplied instantaneously by Opening and closing the solenoid valve.

### Citation List

### Patent Literature

PTL 1: JPH10-10137A

### Summary of Invention

### Technical Problem

An automatic analyzer is an apparatus that causes a biological sample such as blood to react with an analytical reagent specifically reacting with a measurement target component of the sample and detects a complex generated through the reaction by a spectroscopic method such as electrochemical luminescence. Processes from detection of the measurement target component to an output of a result are all automatically performed.

A biochemical automatic analyzer which is an example of the automatic analyzer performs component analysis of a biological sample such as blood serum or urine. In this biochemical automatic analyzer, generally, a sample and a reagent are each dispensed into a reaction container using a dispensing probe and reacted with each other, and a change in tone or muddiness occurring in reaction liquid is optically measured by a photometric unit such as a spectral photometer.

Therefore, dirt or the like of the probe affects accuracy of dispensing and consequently affects reliability of the automatic analyzer. Accordingly, after the sample or the like is dispensed, the sample or the like attached to an outer surface or an inner surface of the probe is cleaned with cleaning liquid in a cleaning tank.

In the biochemical automatic analyzer, deionized water is used as water used for the dispensing or cleaning. When deionized water is made by a deionized water manufacturing apparatus separated from a main body, as disclosed in PTL 1, and even when the supplied water contains bubbles, a water storage tank (water supply tank) that has a sufficient size to stabilize a water flow is provided as a temporary storage buffer in order to prevent the water from entering the inside of the apparatus.

Here, in the water supply tank in which the water flow is stable or stopped, dirt and bacteria are generated on an inner surface of the water supply tank. When the apparatus is used with the dirt and bacteria accumulated in the water supply tank, the dirt and bacteria are supplied to the inside of apparatus flow passages, which affects apparatus malfunction or analytical performance.

Therefore, in a product of the related art, it is necessary for a customer to clean the water supply tank as maintenance. Frequent maintenance that significantly affects the apparatus and analytical performance has become a burden on the customer, and thus it is required to reduce the frequency of the maintenance.

The present invention has been devised in view of the above problems, and an object of the present invention is to provide an automatic analyzer and a water supply tank for the automatic analyzer that has high reliability and is capable of suppressing generation frequency of dirt and bacteria generated on an inner surface of a water supply tank and reducing cleaning frequency of the water supply tank.

### Solution to Problem

The present invention includes a plurality of means for solving the above problems, one example of which is an automatic analyzer including: a water supply tank temporarily reserving liquid fed from automatic analyzer outside and consumed in each mechanism of the automatic analyzer; a supply flow passage connected to each mechanism of the automatic analyzer from the water supply tank; a pump supplying the liquid within the water supply tank; and a circulation flow passage returning the liquid discharged from the pump to the water supply tank. In the water supply tank, a flow whirling within the water supply tank by the liquid from the circulation flow passage is formed, and a bottom surface of a rising slope is included.

### Advantageous Effects of Invention

According to the present invention, it is possible to suppress generation frequency of dirt and bacteria generated on an inner surface of a water supply tank and reduce cleaning frequency of the water supply tank. Problems, configurations, and effects other than those described above will be clarified by the explanation of the following embodiments.

### Brief Description of Drawings

[Fig. 1] Fig. 1 is a diagram illustrating an overall configuration of an automatic analyzer according to an embodiment of the present invention.
[Fig. 2] Fig. 2 is a cross-sectional view illustrating a general water supply tank as seen in a horizontal direction.
[Fig. 3] Fig. 3 is a perspective view illustrating a bottom surface portion of the water supply tank in the automatic analyzer according to the present embodiment.
[Fig. 4] Fig. 4 is a cross-sectional view illustrating the bottom surface portion of the water supply tank in the automatic analyzer according to the present embodiment taken along the line A-B-C of Fig. 5.
[Fig. 5] Fig. 5 is a diagram illustrating the water supply tank of the automatic analyzer according to the present embodiment as seen from an upper surface.
[Fig. 6] Fig. 6 is a cross-sectional view illustrating the water supply tank in the automatic analyzer according to the present embodiment.
[Fig. 7] Fig. 7 is a diagram illustrating details of internal shapes of a water refilling port, a supply port, and a return water inflow port in the automatic analyzer according to the present embodiment.
[Fig. 8] Fig. 8 is a diagram illustrating details of the internal shapes of the water refilling port, the supply port, and the return water inflow port in the automatic analyzer according to the present embodiment.

### Description of Embodiments

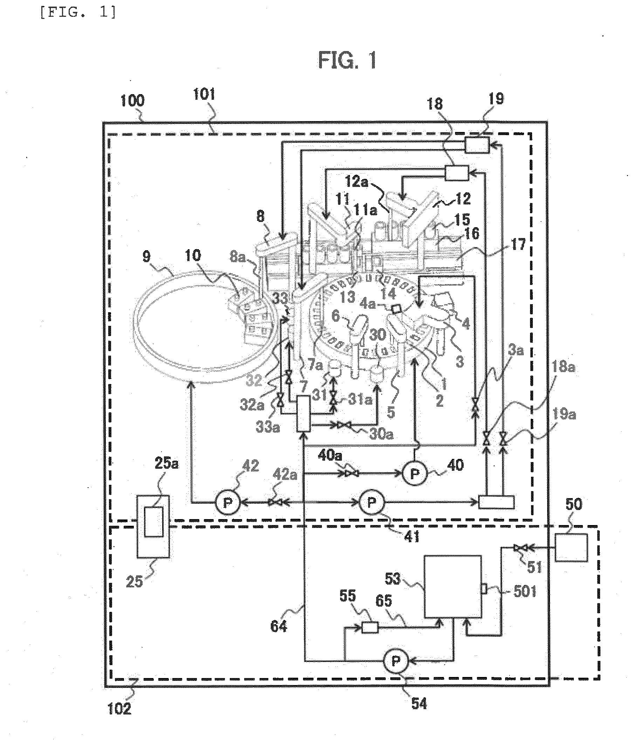

Embodiments of an automatic analyzer and a water supply tank for the automatic analyzer according to the present invention will be described with reference to Figs. 1 to 8. In the drawings used in the present specification, the same or corresponding components are denoted by the same or similar reference numerals, and repeated descriptions of these components may be committed.

First, an overall configuration of the automatic analyzer will be described with reference to Fig. 1. Fig. 1 is a diagram schematically illustrating an overall configuration of an automatic analyzer.100 according to the present invention.

The automatic analyzer 100 illustrated in Fig. 1 is mainly partitioned into an analysis unit 101 configured to mix and react a sample such as blood with a reagent and measure absorbance of reaction liquid, a part of a water supply unit 102 which is a mechanism for supplying deionized water to each mechanism of the analysis unit 101, and a controller 25.

The analysis unit 101 is a mechanism that dispenses the sample and the reagent into a plurality of reaction containers 2 to react the sample with the reagent,, and measures the reaction liquid. The analysis unit 101 includes a reaction disk 1, a reagent disk 9, a sample transportation mechanism 17, reagent dispensing mechanisms 7 and 8, a reagent syringe 19, sample dispensing mechanisms 11 and 12, a sample syringe 18, a cleaning mechanism 3, a light source 4a, a spectral photometer 4, mixing mechanisms 5 and 6, and cleaning tanks 13, 14, 30, 31, 32, and 33.

In the reaction disk 1, the plurality of reaction containers 2 for mixing and reacting the sample with the reagent are lined up in a circumferential form. The sample transportation mechanism 17 that moves a sample rack 16 on which a sample container 15 containing the sample such as blood is placed is installed near the reaction disk 1 (reaction tank).

The sample dispensing mechanisms 11 and 12 capable of rotating and moving vertically are installed between the reaction disk 1 and the sample transportation mechanism 17, and include sample probes 11a and 12a, respectively. The sample syringe 18 is connected to the sample probes 11a and 12a. The sample probes 11a and 12a move in an arc centering on a rotational axis and dispense the sample from the sample container 15, which is transported to a sample dispensing position by the sample transportation mechanism 17, into the reaction containers 2.

. In a movable range of the sample dispensing mechanism 11, the cleaning tank 13 for cleaning the sample probe 11a with cleaning water and a cleaning container (not illustrated for convenience of the illustration) for cleaning the sample probe 11a with special cleaning water are disposed. Similarly, in a movable range of the sample dispensing mechanism 12, the cleaning tank 14 for cleaning the sample probe 12a with cleaning water and a cleaning container (not illustrated for convenience of the illustration) for cleaning the sample probe 12a with special cleaning water are disposed.

The reagent disk 9 has a structure in which a plurality of reagent bottles 10 can be placed therein circumferentially. The reagent disk 9 is kept cool and is covered with a cover having a suction port (not illustrated). The reagent bottle 10 is a bottle that contains a reagent used for sample analysis.

The reagent dispensing mechanisms 7 and 8 capable of rotating and moving vertically are installed between the reaction disk 1 and the reagent disk 9 and include reagent probes 7a and 8a, respectively. The reagent syringe 19 is connected to the reagent probes 7a and 8a. The reagent probes 7a and 8a move in an arc centering on a rotational axis, access the inside of the reagent disk 9 through the suction port, and dispense the reagent from the reagent bottles 10 into the reaction containers 2.

In a movable range of the reagent dispensing mechanism 7, the cleaning tank 32 for cleaning the reagent probe 7a with cleaning water is disposed. In a movable range of the reagent dispensing mechanism 8, the cleaning tank 33 for cleaning the reagent probe 8a with cleaning water is disposed.

Around the reaction disk 1, the mixing mechanisms 5 and 6 that stir mixture liquid (reaction liquid) of the sample and the reagent dispensed into the reaction container 2, the spectral photometer 4 that measures absorbance of the reaction liquid by measuring transmitted light obtained from the light source 4a through the reaction liquid in the reaction container 2, the cleaning mechanism. 3 that cleans the used reaction container 2, and the like are disposed.

The mixing mechanisms 5 and 6 are configured to be capable of operating rotatably in a horizontal direction and operating vertically and stir the mixture liquid (reaction liquid) of the sample and the reagent by being inserted into the reaction container 2. In a movable range of the mixing mechanisms 5 and 6, the cleaning tanks 30 and 31 for cleaning the mixing mechanisms 5 and 6 with cleaning water are disposed. A cleaning pump is connected to the cleaning mechanism 3.

The controller 25 is connected to a device inside the above-described automatic analyzer 100 and controls operations of each device and each mechanism inside the automatic analyzer 100. The controller 25 is a computer provided with a CPU, a memory, or the like, and performs calculation processing to obtain density of a predetermined component in a specimen from a detection result of the spectral photometer 4.

The operation of each device is controlled by the controller 25 based on various programs recorded in a storage apparatus. The storage apparatus stores not only various programs used for measuring specimens but also various parameters input via an input apparatus, information on measurement target specimen (specimen type information or the like), measurement results, and the like.

Control processes of the operations performed by the controller 25 may be collected in one program, may be separated in a plurality of programs, or may be collected or separated in combination. Some or all of the programs may be implemented by dedicated hardware or may be modularized.

A display unit 25a is a display device such as a liquid crystal display that displays various types of information in the automatic analyzer 100, such as an input screen for various parameters or a setting, analysis inspection data of first inspection or re-inspection, a measurement result, and reagent information. The display unit 25a can be a touch panel type that also serves as an input unit.

The water supply unit 102 has a function of supplying deionized water to the analysis unit 101, and includes a deionized water unit 50, a water supply solenoid valve 51, a water level sensor 52, a water supply tank 53, a water supply pump 54, and a fixed throttling 55.

The deionized water unit 50 is a unit that supplies deionized water from the outside of the automatic analyzer 100 to the water supply tank 53 inside the automatic analyzer 100, and is a unit of a facility such as a hospital, an inspection center, or the like where the automatic analyzer 100 is installed.

The water supply tank 53 temporarily reserves liquid to be consumed in each mechanism of the automatic analyzer 100.

The deionized water is not always supplied to the water supply tank 53, and thus the water supply solenoid valve 51 is provided in a pipe from the deionized water unit 50 to the water supply tank 53 to supply the deionized water to the water supply tank as necessary.

The water supply tank 53 includes a laser type water level sensor 71 to prevent an overflow or depletion of the deionized water reserved in the water supply tank 53. The above-described water supply solenoid valve 51 is controlled such that opening and closing are performed based on water level information from the laser type water level sensor 71.

The water supply pump 54 supplies the deionized water from the water supply tank 53 to each mechanism of the analysis unit 101 through a supply flow passage 64. At this time, the controller 25 supplies the deionized water by opening one or more of solenoid valves 3a, 18a, 19a, 30a, .31a, 32a, 33a, 40a, and 42a provided before a point where the deionized water is consumed.

On the other hand, when the deionized water is not consumed in the analysis unit 101, the deionized water is circulated from a circulation flow passage 65 provided with the fixed throttling 55 to the water supply tank 53.

The automatic analyzer 100 has the above configuration.

The configuration of the automatic analyzer 100 is not limited to the case of a biochemical analyzer that analyzes a biochemical analysis item, as illustrated in Fig. 1. An analyzer that analyzes other analysis items, such as an immunity analyzer that analyzes an immunity analysis item can also be used. The biochemical analyzer is not limited to the form illustrated in Fig. 1, but can also be equipped with a separate analysis device that measures other analysis items such as electrolyte.

The automatic analyzer 100 is not limited to the form of the single analysis module configuration, as illustrated in Fig. 1. Two or more analysis modules capable of measuring the same or different various analysis items and preprocessing modules performing preprocessing are connected by a transportation device.

A process of analyzing an inspection sample by the above-described automatic analyzer 100 is generally performed in the following order.

First, the sample in the sample container 15 placed on the sample rack 16 transported to the vicinity of the reaction disk 1 by the sample transportation mechanism 17 is dispensed into the reaction container 2 on the reaction disk 1 by the sample probes 11a and 12a of the sample dispensing mechanisms 11 and 12. Subsequently, the reagent to be used for analysis is dispensed from the reagent bottle 10 on the reagent disk 9 into the reaction container 2 into which the sample is first dispensed, by the reagent dispensing mechanisms 7 and 8. Subsequently, mixture liquid of the sample and the reagent in the reaction container 2 is stirred by the mixing mechanisms 5 and 6.

Thereafter, light generated from the light source 4a is transmitted through the reaction container 2 containing the stirred mixture liquid, and light intensity of the transmitted light is measured by the spectral photometer 4. The light intensity measured by the spectral photometer 4 is transmitted to the controller 25 via an A/D converter and an interface. Then, the controller 25 performs calculation to obtain density of a predetermined component in a liquid sample such as blood or urine, displays a result on the display unit 25a or the like, and stores the result in a storage unit (not illustrated).

Next, the points where the deionized water is consumed inside the automatic analyzer 100 will be described. Main points where the deionized water is used inside the apparatus are a point where circulating water for keeping the reaction disk 1 warm is used, a point where circulating water for keeping the reagent disk 9 cool is used, and a point where cleaning water for cleaning the reagent robes 7a and 8a and the sample probes 11a and 12a is used.

In the reaction disk 1, the deionized water kept at a given temperature (for example, 37 degrees) to react the sample with the reagent at a given temperature is circulated by a circulation pump 40. The reaction container 2 is kept at the given temperature using the deionized water so that the sample is reacted with the reagent under a given condition.

As described above, since the reaction container 2 is kept at the temperature by the deionized water, the light generated from the light source 4a is transmitted not only through the reaction container 2 but also the deionized water flowing through the reaction tank. Here, when there are bubbles on a straight line connecting the light source 4a to the spectral photometer 4, the light generated from the light source 4a may diffuse by the bubbles, and thus an analysis result may not be determined normally. Therefore, in general, a deaerator (not illustrated) is provided in a circulation flow passage of the reaction tank to prevent generation of the bubbles inside the reaction tank.

The inside of the reagent disk 9 is kept at a low temperature by circulating the deionized water cooled by a cooler with a circulation pump 42 to prevent deterioration of the reagent.

The reagent probes 7a and 8a used for sucking and dispensing the reagent and the sample probes 11a and 12a used for sucking and dispensing the sample are not disposable, and the same probes are continuously used.

Here, when the reagent or the sample discharged in a previous dispensing operation remains in the probes, contamination in which the previous reagent or sample is mixed with the reagent or the sample to be sucked in a subsequent operation may occur. Thus, an analysis result may not be determined normally. Therefore, when the same probes are used, outer surfaces of the reagent probes 7a and 8a are cleaned in the cleaning tanks 32 and 33 and outer surfaces of the sample probes 11a and 12a are cleaned in the cleaning tanks 13 and 14 by generally discharging the cleaning water toward the outer surfaces of the corresponding probes. Inner surfaces of the probes are cleaned in the cleaning tanks 13, 14, 31, and 32 by discharging the cleaning water made high pressure using a pump from the corresponding probes. A gear pump 41 is often used to make the cleaning water high pressure.

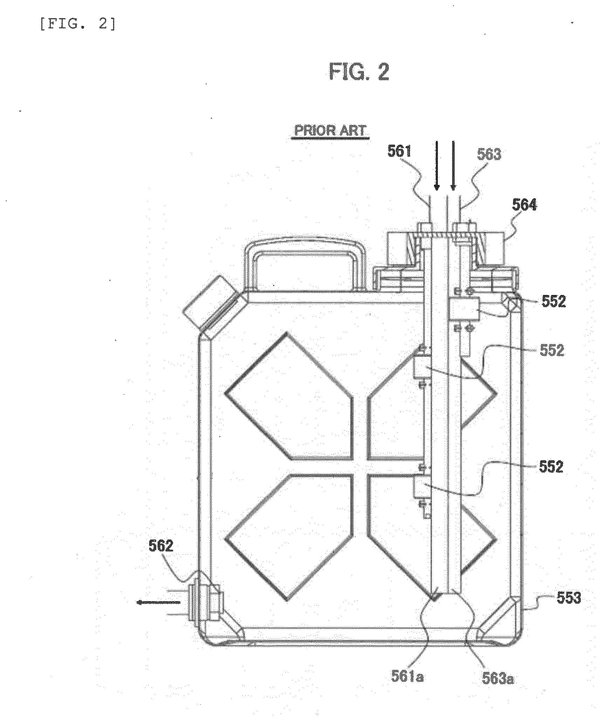

As described above, the deionized water is used for various mechanisms of the analysis unit 101. Therefore, since the bubbles mixed in the supplied deionized water cause deterioration in analytical performance or an apparatus failure, the water supply pump 53 is provided to prevent the mixing of the bubbles in a flow passage and implement stable supply of the deionized water. The shape of a general water supply tank will be described with reference to Fig. 2. Fig. 2 is a diagram illustrating a configuration of a water supply tank of the related art.

Fig. 2 is a cross-sectional view illustrating a general water supply tank 553 as seen in the horizontal direction. The water supply tank 553 includes a water refilling port 561 from the deionized water unit 50, a supply port 562 to the water supply pump 54, and a return water inflow port 563 from the water supply pump 54 in addition to a float type water level sensor 552. The float type water level sensor 552, the water refilling port 561, and the return water inflow port 563 are fixed to a cap 564, and installed in the water supply tank 553. The cap 564 is installed in the water supply tank 53 without being fixed, and thus a structure in which air is released from a gap is achieved.

When the deionized water supplied from the water refilling port 561 and the return water inflow port 563 is discharged from a position higher than a liquid level of the deionized water stored in the water supply tank 553, the bubbles are generated while the deionized water enters the liquid surface. Therefore, discharge ports (an outlet 561a on the water refilling port 561 side and an outlet 563a on the return water inflow port 563 side) of the deionized water are set at a height equal to or less than a height of the float type water level sensor 552.

The water supply tank 553 has a sufficient size so that the deionized water is not supplied from the support port 562 to the water supply pump 54 and a water flow in the tank is stable even when the bubbles are mixed in the supplied deionized water.

The supply port 562 to the side of the analysis unit and the outlet 561a of the water refilling port 561 from the deionized water unit 50 or the outlet 563a, of the return water inflow port 563 are installed at sufficient distant positions.

On the other hand, the water flow in the water supply tank 553 is stable. Therefore, there is concern that water staying in the water supply tank 553 for a long time gives a rise to the growth of germs, which results in accumulation of dirt on the inner surface of the water supply tank 553. There is also concern that the dirty water supplied to the analysis unit 101 via the water supply pump 54 may affect analytical performance.

As countermeasures, customers need to clean the water supply tank 553, which has become a burden on the customers.

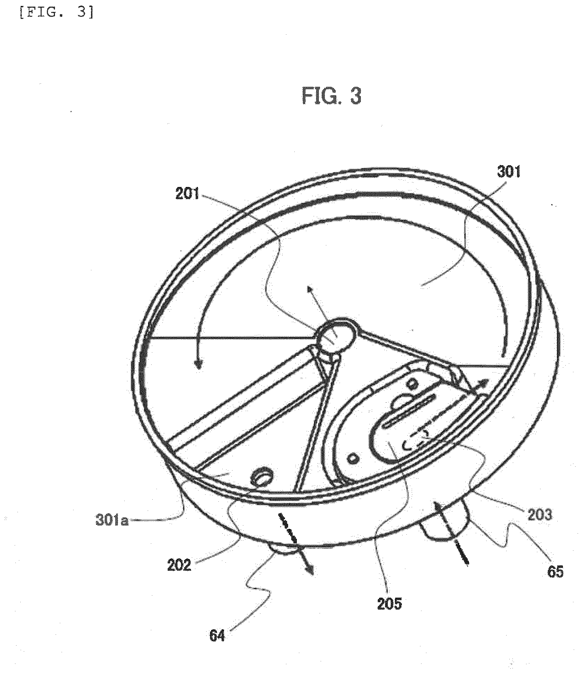

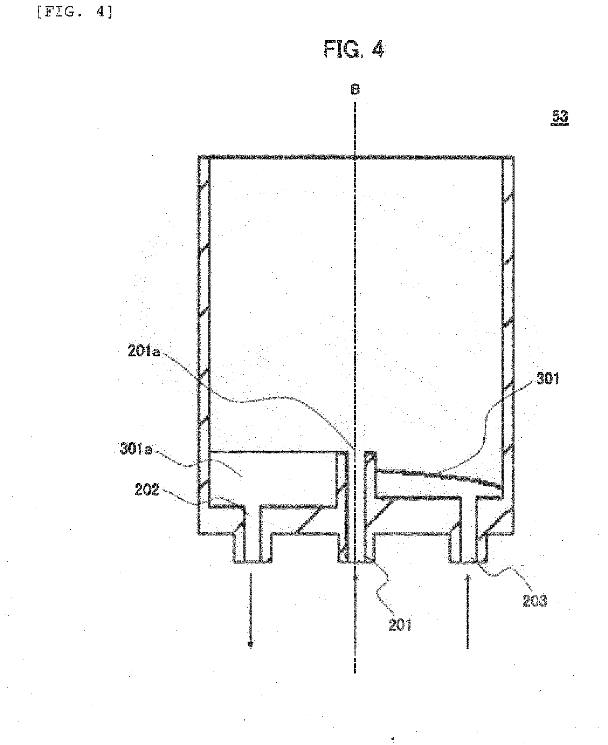

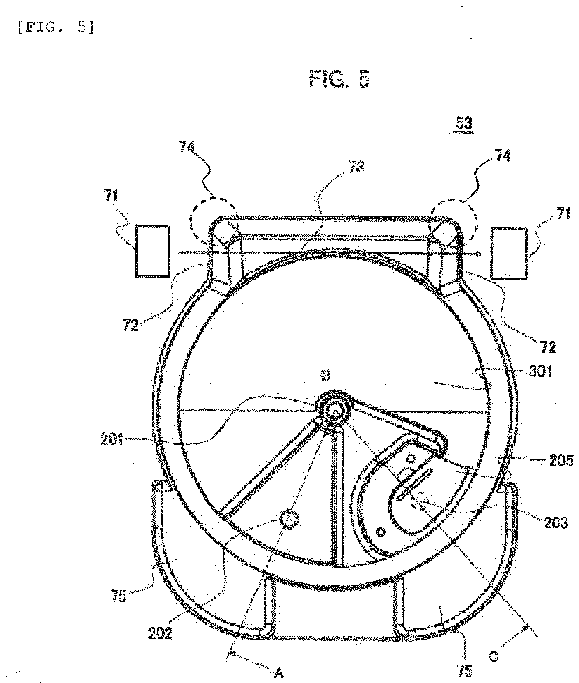

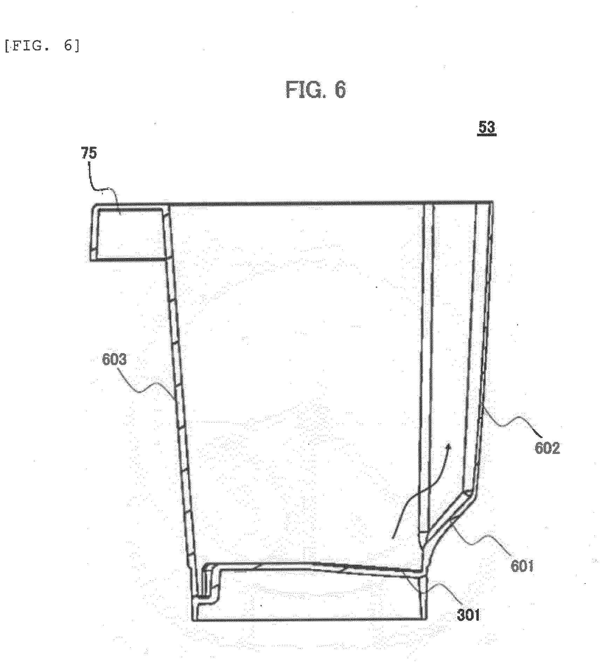

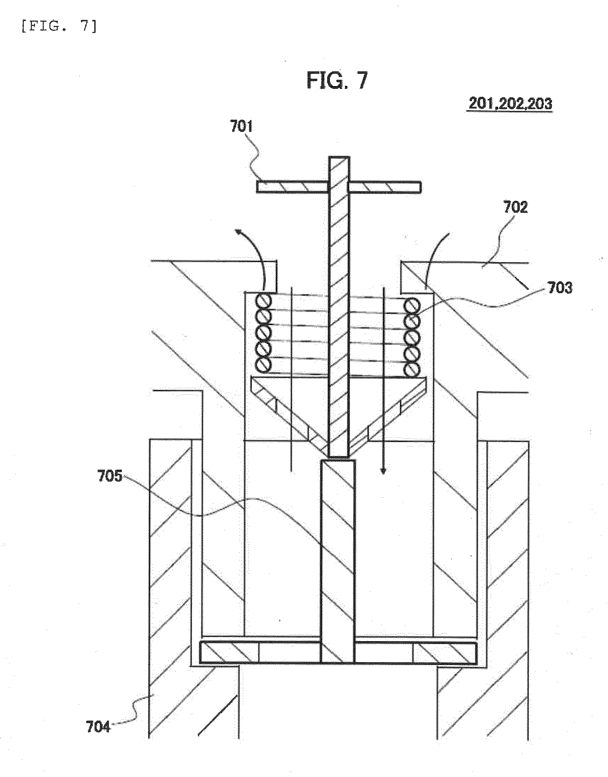

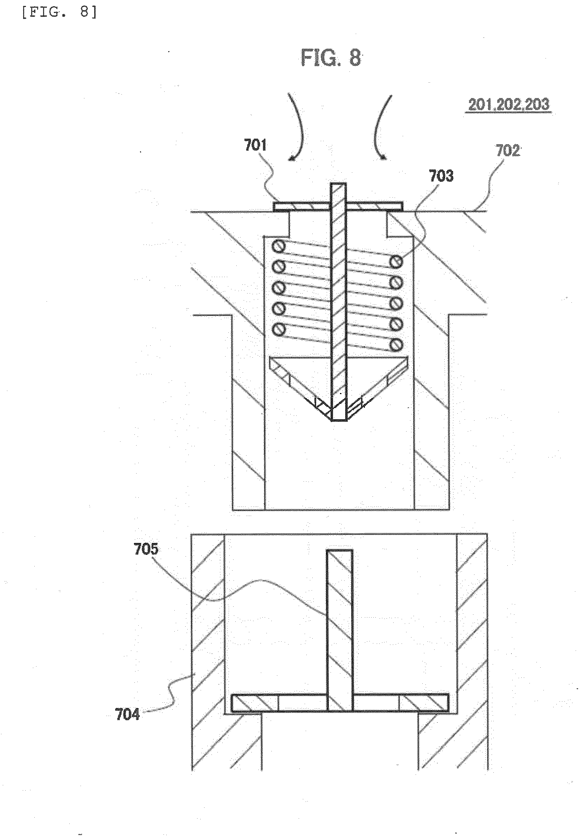

Next, a structure of the water supply tank 53 according to the present embodiment capable of suppressing accumulation of dirt on the inner surface of the water supply tank 53 and suppressing occurrence of the above-described problems than in the related art will be described with reference to Fig. 3 and subsequent drawings. Fig. 3 is a perspective view illustrating a bottom surface portion of the water supply tank. Fig. 4 is a cross-sectional view illustrating the bottom surface portion of the water supply tank taken along the line A-B-C of Fig. 5. Fig. 5 is a diagram illustrating the water supply tank as seen from an upper surface. Fig. 6 is a cross-sectional view illustrating the water supply tank. Figs. 7 and 8 are diagrams illustrating details of internal shapes of a water refilling port, a supply port, and a return water inflow port.

As illustrated in Fig. 3, in the water supply tank 53, at least a bottom surface 301 side. is formed in a cylindrical shape.

In the water supply tank 53, a water refilling port 201 for supplying liquid from the deionized water unit 50 to the water supply tank 53 is provided in a center of the bottom surface 301. A supply port 202 becoming a connection portion between the water supply tank 53 and the supply flow passage 64 and a return water inflow port 203 becoming a connection portion between the water supply tank 53 and the circulation flow passage 65 are also provided in the bottom surface 301. The water refilling port 201, the supply port 202, and the return water inflow port 203 are opened perpendicularly in a vertical direction from the bottom surface 301.

A half of the bottom surface 301 of the water supply tank 53 is in a rising slope shape so that a flow whirling within the water supply tank 53 by the circulation deionized water returned from the circulation flow passage 65 to the water supply tank 53 is formed. The entire bottom surface 301 may have a rising slope, and is not particularly limited.

Further, a cover 205 covering the return water inflow port 203 and changing a direction of a flow of the circulation water fed from the return water inflow port 203 to a vertically horizontal direction is provided above the return water inflow port 203. An opening portion of the cover 205 is opened on the circumferential side of the bottom surface portion of the substantially cylindrical water supply tank 53.

The cover 205 causes the deionized water returned from the circulation flow passage 65 to the water supply tank 53 to collide with the cover 205, and a direction of a flow of the deionized water is changed to a horizontal direction substantially parallel to the bottom surface 301 of the water supply tank 53. A water flow in which the flowing deionized water draws a spiral shape along the rising slope bottom surface 301 and the substantially cylindrical side surface is formed. Therefore, a portion in which the water stagnates on the bottom surface 301 inside the water supply tank 53 is rarely formed, and dirt such as germs is rarely accumulated.

At this time, since a flow rate of the deionized water of which the direction is changed to the horizontal direction is inversely proportional to an area of a discharge port in the horizontal direction, it is desirable to decrease an area of an opening portion between the cover 205 and the base.

As illustrated in Fig. 4, the support port 202 is formed at a position lower in the vertical direction than the return water inflow port 203 and the outlet 201a of the water refilling port 201. In Figs. 3 and 4, a recessed portion 301a of the bottom surface 301 is provided. Accordingly, it is possible to prevent air with a small mass from being supplied to the water supply pump 54. As described above, a water flow in the water supply tank 53 becomes a flow oriented slightly upward along the rising slope bottom surface 301. Therefore, even when the bubbles are mixed in the deionized water supplied from the water refilling port 201, the bubbles are allowed to escape to the top of the water supply tank 53.

There are no specific regulations on a positional relationship between the outlet 201a of the water refilling port 201 and the return water inflow port 203 in a height direction. Since it is unlikely that there are bubbles in the return water inflow port 203 to which the deionized water once passing through the supply port 202 located on the lowest surface returns, and there is concern that the deionized water with a high possibility of containing the bubbles may be discharged from the deionized water unit 50 side, the water refilling port 201 is preferably located at a position higher than the return water inflow port 203 in the vertical direction, as illustrated in Fig. 4.

The water level of the water supply tank 53 can also be monitored by the float type water level sensor 552. However, by monitoring the water level from the outside of the water supply tank 53, it is possible to reduce matters that come into contact with the deionized water and reduce dirt accumulation portions and cleaning portions. Therefore, monitoring from the outside is preferable.

Accordingly, as illustrated in Fig. 5, corner portions 74 partially protruding from a side surface of the water supply tank 53 are provided and laser type water level sensors 71 are provided in the corner portions 74. In this case, it is desirable to have a flat surface shape 72 on the surface of the water supply tank 53 on a laser axis 73 of the laser type water level sensors 71 so that a water level can be stably monitored from the outside of the water supply tank 53 by the laser type water level sensors 71.

It is desirable to select a material of the water supply tank 53 from materials which have a physical property in which a wavelength of laser light for measurement of a water level is transmitted and water is not transmitted. When the number of candidates is plural, it is desirable to consider presence or absence of an antibacterial function.

Further, as illustrated in Fig. 6, a slope portion 601 sloping in a direction in which a diameter of the water supply tank 53 widens upward in the vertical direction can be provided in the corner portion 74 on a side surface of the water supply tank 53. In addition to the slope portion 601, as illustrated in Fig. 6, a slope portion 602 that has a gentler slope angle than the slope portion 601 can be provided above the slope portion 601 or a slope portion 603 can be provided on a surface on the side on which a handle 75 is formed.

The water supply tank 53 can have a cylindrical shape in which the slope portions 603 are provided on all surfaces other than a surface on which the corner portions 74 are formed and surfaces other than the bottom surface 301 also have a larger diameter than the bottom surface 301 side, that is, a substantial bucket shape that has a large diameter on the upper surface side in the vertical direction and a small diameter on the bottom surface.

As illustrated in Figs. 5 and 6, on a side surface on a side opposite to the corner portions 74, the handle 75 used by an operator of the automatic analyzer 100 when attaching or detaching the water supply tank 53 is provided.

Due to presence of one of the corner portions 74 and the handle 75, it is possible to obtain the effect that it is easy to know a direction in which the substantially cylindrical water supply tank 53 is installed.

It is preferable to provide a leakage prevention construction for the liquid in an opening of at least one of the return water inflow port 203 becoming the connection portion between the water supply tank 53 and the circulation flow passage 65, the supply port 202 becoming the connection portion between the water supply tank 53 and the supply flow passage 64, and the water refilling port 201 for supplying the liquid from automatic analyzer outside to the water supply tank 53.

As described above, in order to improve attachment and detachment of the water supply tank 53, the water refilling port 201, the supply port 202, and the return water inflow port 203 are opened perpendicularly in the vertical direction from the bottom surface 301. Therefore, as illustrated in Figs. 7 and 8, a stopper 701 and a spring 703 are provided in the respective openings as the leakage prevention configuration of the liquid.

Further, in the respective base portions in which the water refilling port 201, the supply port 202, and the return water inflow port 203 of the water supply tank 53 are installed, a tube joint 704 including a push rod 705 is fixed. In the stopper 701 and the push rod 705, a slit is cut so that the deionized water passes.

Fig. 7 illustrates a state in which the water supply tank 53 is inserted into the tube joint 704. When the stopper 701 pushed by the push rod 705 fixed to the tube joint 704 is raised, a gap is generated between the stopper 701 and a water supply tank bottom surface 702, and .thus the deionized water can be supplied or discharged.

Fig. 8 illustrates a state in which the water supply tank is detached from the tube joint 704. The stopper 701 away from the push rod 705 is moved downward by a force of the spring 703, the gap between the stopper 701 and the water supply tank bottom surface 702 is filled, and thus the deionized water cannot be discharged.

Next, effects of the present embodiment will be described.

The automatic analyzer 100 according to the above-described present embodiment includes: the water supply tank 53 temporarily reserving liquid fed from automatic analyzer outside and consumed in each mechanism of the automatic analyzer 100; the supply flow passage 64 connected to each mechanism of the automatic analyzer 100 from the water supply tank 53; the water supply pump 54 supplying the liquid within the water supply tank 53; and the circulation flow passage 65 returning the liquid discharged from the water supply pump 54 to the water supply tank 53. In the water supply tank 53, a flow whirling within the water supply tank 53 by the liquid from the circulation flow passage 65 is formed, and the bottom surface 301 of a rising slope is included.

In this way, by optimizing the tank shape, it is possible to make a water flow in the water reserved in the water supply tank 53 and reduce portions in which the water flow stagnates. Therefore, it is possible to suppress generation or accumulation of the dirt and bacteria and reduce maintenance frequency such as cleaning.

The return water inflow port 203 becoming the connection portion between the water supply tank 53 and the circulation flow passage 65, the supply port 202 becoming the connection portion between the water supply tank 53 and the supply flow passage 64, and the water refilling port 201 for supplying the liquid from the automatic analyzer outside to the water supply tank 53 are included in the bottom surface 301, and are opened perpendicularly in the vertical direction from the respective bottom surfaces 301. Therefore, even when the bubbles are contained in the deionized water, a frequency at which light bubbles move to the lower side in the vertical direction is not high, and the bubbles can be prevented from being actually mixed to the supply side to the analysis unit 101. Therefore, it is possible to prevent the water supply pump 54 from becoming idle and becoming a cause of a failure or to prevent a decrease in water supply pressure from being a cause of deterioration in analytical performance. It is possible to improve attachment and detachment of the water supply tank 53.

The automatic analyzer further includes the cover 205 covering the return water inflow port 203 and changing a direction of a flow of circulation water fed from the return water inflow port 203 to the vertically horizontal direction. With the structure for improving attachment and detachment, it is possible to achieve a structure in which a spiral flow upward in the vertical direction from the bottom surface 301 can be easily formed.

The leakage prevention construction for the liquid is provided in at least one opening out of the return water inflow port 203 becoming the connection portion between the water supply tank 53 and the circulation flow passage 65, the supply port 202 becoming the connection portion between the water supply tank 53 and the supply flow passage 64, and the water refilling port 201 for supplying the liquid from the automatic analyzer outside to the water supply tank 53. It is not necessary to consider leakage during attachment or detachment of the water supply tank 53, and it is possible to further reduce the burden on a user.

Further, the supply port 202 becoming the connection portion between the water supply tank 53 and the supply flow passage 64 is provided at a position lower in the vertical direction than the return water inflow port 203 becoming the connection portion between the water supply tank 53 and the circulation flow passage 65. Thus, it is possible to achieve a structure in which the bubbles can be suppressed from being oriented toward the water supply pump 54 side or the analysis unit 101 side.

The supply port 202 becoming the connection portion between the water supply tank 53 and the supply flow passage 64 is provided at a position lower in the vertical direction than the water refilling port 201 for supplying the liquid from the automatic analyzer outside to the water supply tank 53. Thus, it is also possible to achieve a structure in which the bubbles can be suppressed from being oriented toward the water supply pump 54 side or the analysis unit 101 side.

Further, the water supply tank 53 has a cylindrical shape at least on the bottom surface 301 side. Thus, it is possible to reduce portions where water is congested.

The water supply tank 53 has a cylindrical shape in which surfaces other than the bottom surface 301 also have a larger diameter than the bottom surface 301 side. Thus, the water supply tank 53 can continue the spiral flow upward in the vertical direction, thereby making it possible to reduce portions where water is congested as much as possible.

Further, the water supply tank 53 includes the corner portions 74 where a part of a side surface protrudes. Thus, it is easy to know a direction in which the water supply tank 53 is installed, and the tank shape can be made more workable for a user.

The slope portion 601 is formed in the corner portion 74. A flow of the deionized water can be made even in the corner portion 74 by providing the flat surface shape 72. Thus, it is possible to suppress accumulation of the dirt such as germs.

Further, the laser type water level sensor 71 is further provided in the corner portion 74. Thus, it is possible to reduce the number of structures to be installed in the water supply tank 53, and it is possible to further reduce a cleaning burden on a user.

### <Others>

The present invention is not limited to the above embodiment and various modifications and applications can be made. The above-described embodiment has been described in detail to facilitate description of the present invention and the present invention is not limited to all the described configurations.

For example, the case in which the water refilling port 201 is provided on the bottom surface of the water supply tank has been illustrated, but the water refilling port 201 may be provided on a side surface of the water supply tank. The case in which a surface of the recessed portion 301a in which the supply port 202 is provided has been illustrated, but a. surface state does not matter as long as the water refilling port 201 is installed at a position lower than the outlet 201a on the water refilling port 201 side. For example, the surface state may be a mortar shape of which the diameter decreases as moving toward a center of the water supply port.

The water refilling port, the support port, and the return water inflow port can be provided on the side surface of the water supply tank 53. other than the bottom surface 301 of the water supply tank 53. In this case, it is preferable to separately provide a mechanism for preventing the bubbles from being mixed in the supply port, particularly. As an opening method on the side surface, an opening may be perpendicular to the side surface. Particularly, in the return water inflow port, it is preferable to form an opening in a tangential direction of the side surface of the water supply tank 53. Also, in another water refilling port or supply port, it is preferable to form an opening in the tangential direction.

### Reference Signs List

1: reaction disk
2: reaction container
3: cleaning mechanism
3a, 18a, 19a, 30a, 31a, 32a, 33a, 40a, 42a: solenoid valve
4: spectral photometer
4a: light source
5, 6: mixing mechanism
7, 8: reagent dispensing mechanism
7a, 8a: reagent probe
9: reagent disk
10: reagent bottle
11, 12: sample dispensing mechanism
11a, 12a: sample probe
13, 14: cleaning tank
15: sample container
16: sample rack
17: sample transportation mechanism
18: sample syringe
19: reagent syringe
25: controller
25a: display unit
30, 31, 32, 33: cleaning tank
40, 42: circulation pump
41: gear pump
50: deionized water unit
51: water supply solenoid valve
53: water supply tank
54: water supply pump
55: fixed throttling
64: supply flow passage
65: circulation flow passage
71: laser type water level sensor
72: flat surface shape
73: laser axis
74: corner portion
75: handle
100: automatic analyzer
101: analysis unit
102: water supply unit
201: water refilling port (water supply port)
201a: outlet
202: supply port (discharge port)
203: return water inflow port (circulation port)
205: cover
301: rising slope bottom surface
301a: recessed portion
552: float type water level sensor
553: water supply tank
561: water refilling port
561a: outlet
562: supply port
563: water inflow port
563a: outlet
564: cap
601, 602, 603: slope portion
701: stopper
702: water supply tank bottom surface
703: spring
704: tube joint
705: push rod

## Claims

1. An automatic analyzer comprising:
a water supply tank temporarily reserving liquid fed from automatic analyzer outside and consumed in each mechanism of the automatic analyzer;
a supply flow passage connected to each mechanism of the automatic analyzer from the water supply tank;
a pump supplying the liquid within the water supply tank; and
a circulation flow passage returning the liquid discharged from the pump to the water supply tank, wherein
in the water supply tank, a flow whirling within the water supply tank by the liquid from the circulation flow passage is formed, and a bottom surface of a rising slope is included.

2. The automatic analyzer according to claim 1, wherein
a circulation port becoming a connection portion between the water supply tank and the circulation flow passage is provided in the bottom surface, and
the circulation port opens perpendicularly in a vertical direction from the bottom surface.

3. The automatic analyzer according to claim 2, further comprising:
a cover covering the circulation port and changing a direction of a flow of circulation water fed from the circulation port to a vertically horizontal direction.

4. The automatic analyzer according to claim 1, wherein
a discharge port becoming a connection portion between the water supply tank and the supply flow passage is provided in the bottom surface, and
the discharge port opens perpendicularly to the vertical direction from the bottom surface.

5. The automatic analyzer according to claim 1, wherein
a water supply port for supplying the liquid to the water supply tank from the automatic analyzer outside is provided on the bottom surface, and
the water supply port opens perpendicularly to the vertical direction from the bottom surface.

6. The automatic analyzer according to claim 1, wherein
a leakage prevention construction for the liquid is provided in at least one opening out of a circulation port becoming a connection portion between the water supply tank and the circulation flow passage, a discharge port becoming a connection portion between the water supply tank and the supply flow passage, and a water supply port for supplying the liquid to the water supply tank from the automatic analyzer outside.

7. The automatic analyzer according to claim 1, wherein
a discharge port becoming a connection portion between the water supply tank and the supply flow passage is provided at a position lower in the vertical direction than a circulation port becoming a connection portion between the water supply tank and the circulation flow passage.

8. The automatic analyzer according to claim 1, wherein
a discharge port becoming a connection portion between the water supply tank and the supply flow passage is provided at a position lower in the vertical direction than a water supply port for supplying the liquid to the water supply tank from the automatic analyzer outside.

9. The automatic analyzer according to claim 1, wherein
the water supply tank has a cylindrical shape at least on the bottom surface side.

10. The automatic analyzer according to claim 1, wherein
in a position other than a bottom surface, the water supply tank has a cylindrical shape whose diameter is larger than the bottom surface side.

11. The automatic analyzer according to claim 9, wherein
the water supply tank includes a corner portion where a part of a side surface protrudes.

12. The automatic analyzer according to claim 11, wherein
an inclined surface is formed in the corner portion.

13. The automatic analyzer according to claim 11, wherein
a laser type water level meter is further provided in the corner portion.

14. A water supply tank temporarily reserving liquid fed from automatic analyzer outside and consumed in each mechanism of an automatic analyzer, wherein
in the water supply tank, a flow is formed which whirls within the water supply tank by the liquid from a circulation flow passage returning the liquid discharged from a pump supplying the liquid within the water supply tank, to the water supply tank, and a bottom surface of a rising slope is included.
